# EUROPÄISCHE PATENTANMELDUNG

(11) **EP 1 350 558 A1**
(43) Veröffentlichungstag der Anmeldung: **08.10.2003**
(21) Anmeldenummer: 03005867.1
(22) Anmeldetag: 15.03.2003
(51) Int. Cl.: B01J 2/12

(54) **Trommel zum Agglomerieren**

(30) Priorität: 05.04.2002 DE 10215111
(71) Anmelder: Heinze, Gerald, Prof. Dr., 49577 Kettenkamp (DE)
(72) Erfinder: Heinze, Gerald, Prof. Dr., 49577 Kettenkamp (DE)
(74) Vertreter: Engelmann, Kristiana

(57) **Zusammenfassung**

Die Erfindung beschreibt Granuliertrommeln, die keinen kreisförmigen Querschnitt haben, sondern regelmäßige Vielecke als Querschnitte. Durch diese Bauart wird das "Rutschen" des zu granulierenden feinteiligen Stoffes auf der Innenwand der Granuliertrommel verhindert. Dem zu granulierenden feinteiligen Stoff wird in der Regel eine Flüssigkeit, vorwiegend Wasser, zugesetzt, um die Granulierung zu erreichen. Dadurch wird der Rutscheffekt noch verstärkt, was zu erheblichen Nachteilen beim Granulieren und in Einzelfällen sogar bis zur Unausführbarkeit des Granulierens führt.

Der Rutscheffekt wird in den erfindungsgemäßen Trommeln mit einem aus Vielecken bestehenden Querschnitt verhindert.

## Beschreibung

Mit Methoden der mechanischen Verfahrenstechnik können feintelige Stoffe in grobteilige Stoffe umgewandelt werden. Hierfür existiert der Begriff Granulieren. Granulieren ist ein Teilgebiet der Agglomeration.

Das Granulieren kann ein aufbauender Vorgang sein - wie zuvor ausgeführt. Es kann aber auch ein Vorgang der Zerkleinerung sein.

Zur Unterscheidung wird der Begriff Aufbaugranulierung verwendet, wenn aus feinteiligen Stoffen grobteilige hergestellt werden. Solche grobteiligen Stoffe, Granulate genannt, haben in der Regel eine kugelförmige Größe zwischen 1-50 mm.

Für die Aufbaugranulierung werden seit über 80 Jahren Granuliertrommeln eingesetzt.. Trommeln sind geometrische, langgestreckte Hohlkörper mit einem kreisförmigen Querschnitt.

Eine Betriebstrommel kann beispielsweise einen Hohlkörper mit einer Länge von 8 m haben und einen kreisförmigen Querschnitt mit einem Durchmesser von 1,8 m aufweisen. Eine Granuliertrommel ist mit einem Antrieb versehen und um ihre Längsachse drehbar gelagert. Die Trommel hat an der einen Stirnseite eine Einfüllöffnung für das zu granulierende Material und an der anderen Stirnseite eine Austrittsöffnung. Üblicherweise entspricht die Austrittsöffnung dem gesamten kreisförmigen Querschnitt der Trommel. Der Nachteil dieser Trommeln besteht darin, dass sie zur Austragsöffnung hin geneigt sind. Mit dieser Neigung will man erreichen, dass die in der Trommel erzeugten Granulate ausgetragen werden. Man nimmt dabei den Nachteil in Kauf, dass Granulate unterschiedlicher Größe die Trommel verlassen

In derartigen Trommeln wird durch die Einfüllöffnung der zu granulierende feinteilige Stoff eingegeben und die einzelnen Teichen zumeist unter Zugabe einer Flüssigkeit zu Granulaten unterschiedlicher Größe aneinander gelagert.

Bekannt ist aus der Druckschrift DE-AS 17 92 014 insbesondere eine Trommel, deren Neigungswinkel in Richtung zur Austragsöffnung stufenlos aus der Horizontalen heraus veränderbar ist. Konstruktiv ist bei dieser Trommel ausgeschlossen, dass die Trommel so gekippt wird, dass die Längsachse in Förderrichtung des Gutes eine Anstieg aufweist. Gemeinsamer Nachteil ist bei horizontal angeordneten Trommeln, wie sie etwa aus der Druckschrift DE-AS 11 44 694 bekannt sind oder Trommeln, die in Richtung ihrer Austragsöffnung geneigt sind, dass sie einen sehr schlechten Klassiereffekt besitzen. Mit schlechten Klassiereffekt ist gemeint, dass Granulate mit sehr unterschiedlichen Größen die Trommeln verlassen. Solchen Trommeln werden Siebe nachgeschaltet. Von der gewünschten Größe her unbrauchbare Granulate werden zerkleinert und damit wird wieder unwirtschaftlich Material im Kreislauf gefahren.

Zum Erreichen eines guten Klassiereffektes wird in der Druckschrift DE 35 03 947 vorgeschlagen, Trommeln einzusetzen, die einen Anstieg in Richtung der Austragsöffnung aufweisen.

Durch eine derartige Trommelanordnung wird erreicht, dass aus der Austragsöffnung Granulate die Trommel verlassen, die untereinander weitgehend gleiche Größenordnungen aufweisen. Damit wurde eine bedeutsame Verbesserung des Granulierens in einer Trommel erreicht.

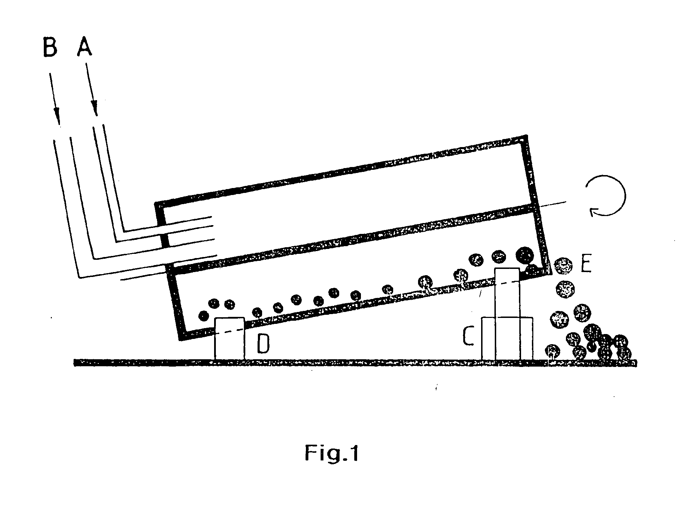

Die Figur 1 zeigt als Seitenansicht eine Trommel mit einem in der Längsachse ansteigenden Winkel. Bei A wird die Granulierflüssigkeit - zumeist Wasser - und bei B der zu granulierende feinteilige Stoff aufgegeben. Die Granulate verlassen die Trommel bei E. Mit D ist der Antrieb gekennzeichnet und mit C eine Hubeinrichtung zur Veränderung des Winkels der Längsachse der Trommel.

Es wurde auch vorgeschlagen, diese Trommeln nicht zylindrisch zu bauen, sondern konisch oder doppelkonisch. Die damit erreichten Verbesserungen bezogen sich vorwiegend auf die Einsparung von Baumaterial für die Trommeln.

Ein Nachteil der zuletzt beschriebenen Trommeln mit einem Anstieg zur Austrittsöffnung ist der, dass die im Querschnitt kreisförmigen Trommelwände die mit Flüssigkeit benetzten feinteiligen Stoffe und die mit Flüssigkeit gefüllten Granulate "rutschen" lassen. Das ist ein Nachteil, da die Granulierung dadurch verzögert wird oder im Extremfall überhaupt nicht zustande kommt.

Ausserdem wird durch diese Rutscheffekte die Durchsatzleistung verringert, das erneute Anfahren der Granulation nach einer Betriebspause verzögert, die Bildung von Granulaten bei bestimmten schwer zu granulierenden Stoffen erschwert und der erwartete Klassiereffekt minimiert.

Der Einbau von kleinen Blechtafeln auf die Innenwände der Trommel zur Verhinderung des Rutscheffektes bringt keine Verbesserung; im Gegenteil, denn zwischen Blech und Trommelwand lagert sich Material ab, dass von Zeit zu Zeit mühselig entfernt werden muss.

Aufgabe der vorliegenden Erfindung ist es daher, die Trommel so zu verbessern, dass dieser Rutscheffekt ausgeschlossen wird.

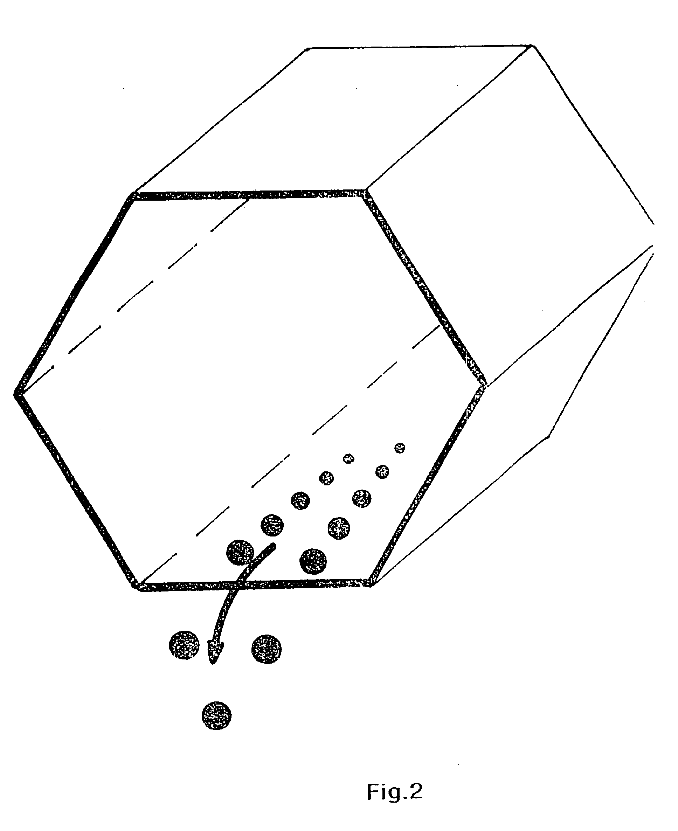

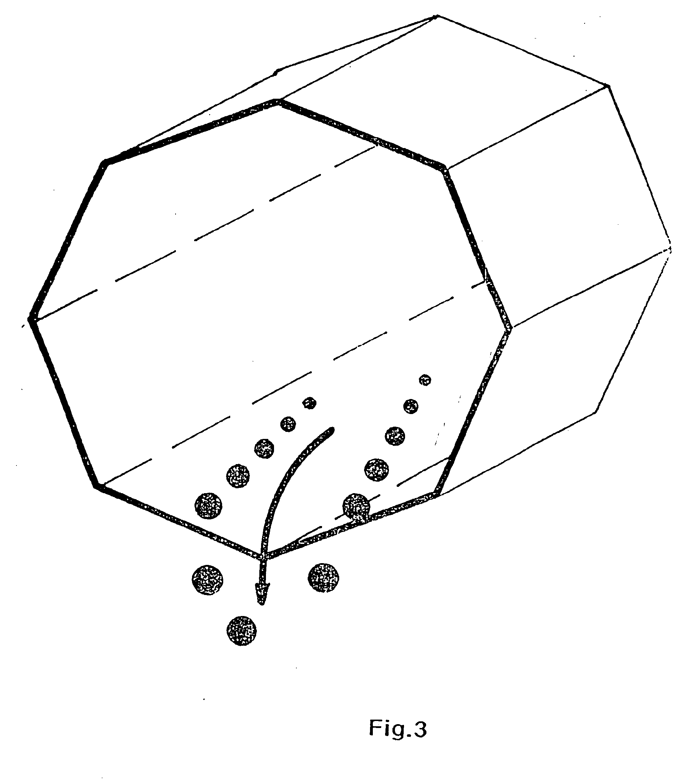

Erfindungsgemäß wird diese Aufgabe dadurch gelöst, dass die Trommeln als geometrische Hohlkörper keine kreisförmigen Querschnitt haben, sondern regelmäßige Vielecke sind. (Beispiele hierfür sind die Figuren 2 und 3).

Unter regelmäßigen Vielecken versteht man bekanntlich Vielecke mit gleichen Seiten und gleichen Winkeln. Theoretisch können es auch unregelmäßige Vielecke sein, die aber einen Mehraufwand bei der Herstellung solcher Trommeln erfordern.

Erfindungsgemäß werden regelmäßige Fünfecke, Sechsecke und Achtecke bevorzugt.

Die Eckpunkte von Vielecken liegen stets auf einem Kreis. Je größer die Anzahl der Ecken eines regelmäßigen Vielecks sind, umso mehr nähert sich sein Flächeninhalt dem Inhalt des umschriebenen Kreises. Der Grenzfall ist ein Vieleck mit unendlich vielen Ecken. Das würde den gewünschten Effekt der Erfindung annuliieren.

Andererseits darf die Zahl der Ecken auch nicht zu gering gewählt werden, da dann die Gefahr besteht, das sich in den Ecken des Vielecks im Laufe der Zeit Material absetzt und letztlich - wenn das Material nicht laufend entfernt wird - ein nahezu kreisrunder Querschnitt entsteht.

Welche Art von Vieleck als Trommelquerschnitt, also welche Zahl an Ecken gewählt wird, hängt von der Art des zu granulierenden Rohstoffes ab. Allgemein kann gelten, dass klebrige Stoffe ein Vieleck mit vielen Ecken erfordern, hingegen nicht klebrige Stoffe in einem Vieleck mit weniger Ecken granuliert werden können.

Ein weiterer Gedanke der Erfindung ist eine Trommel aus gewelltem Blech (Wellblech) hergestellt, um den eingangs beschriebenen Rutscheffekt zu vermeiden. Für eine Trommel mit einem kreisförmigen Querschnitt kann der Vorgang der Granulierung des feinteiligen Stoffes so beschrieben werden: In einer sich drehenden Trommel wird der feinteilige Stoff durch die Zentrifugalkraft solange an die Trommelwand gedrückt bis die Schwerkraft überwiegt. Der Stoff erreicht an der Trommelwand eine gewisse Höhe; danach fällt der feinteilige Stoff ab und bildet mehr oder weniger Granulate. Die Bildung der Granulate wird durch den Rutschvorgang negativ beeinflußt.

Durch die Aufteilung der bisher im Querschnitt kreisförmigen Fläche in Teilflächen in einem Vieleck oder in den Vertiefungen eines gewellten Bleches werden mehrere granulatbildende Flächen geschaffen.

Durch die erfindungsgemäßen Bauweisen der Trommel wird der Rutscheffekt vermieden. Dadurch erfolgt eine zeitlich verkürzte Granulatbildung. Eine schnellere Granulatbildung erhöht die Durchsatzleistung der Trommel.

Die schnelle Granulatbildung führt auch zu kürzeren Anfahrzeiten nach einer Betriebspause.

Beim erwähnten Rutscheffekt wird feines Material von den schon gebildeten Granulaten mitgeführt und muss nachfolgend ausgesiebt werden, d.h., dass der Klassiereffekt veringert wird. Bei der Granulation in einem Vieleck tritt kein Mitführen von Feinmaterial auf. Feinmaterial wird sehr schnell bei der Granulatbildung aufgenommen, also verbraucht. Der Klassiereffekt ist höher als in einer Trommel mit einem kreisrunden Querschnitt.

Die aus Vielecken bestehende Trommel ist aussen mit Ringen versehen, die mit den Antriebsrädern in Kontakt stehen, deren Umlaufgeschwindigkeit stufenlos regelbar ist. Damit ist es möglich, die Umdrehungsgeschwindigkeit der Trommel zu verändern und somit den Granuliervorgang zu beeinflussen. Bei Stoffen, die schnell granulieren, wird die Umdrehungsgeschwindigkeit erhöht und umgekehrt.

Granulieren ist ein Vorgang, der sich nicht exakt in mathematische Formeln kleiden lässt. Granulieren heisst den Granuliervorgang beobachten und danach handeln. Die Umdrehungsgeschwindigkeit muss so eingestellt werden, dass kein Katarakteffekt entsteht. Er entsteht bei zu hoher Geschwindigkeit: der zu granulierende Stoff fällt in die Trommel und rollt nicht mehr. Diese Erscheinung wird für Kugelmühlen gewünscht, aber nicht für Granuliertrommeln.

Die Trommel wird mit einer Hubvorrichtung versehen, um den Anstellwinkel der Trommel verändern zu können (vgl. Fig. 1C). Der Winkel muss beim Granulieren positiv sein. Aber auch eine negative Einstellung muss möglich sein, falls es erforderlich ist, aus welchen Gründen auch immer, die Trommel restlos zu entleeren.

## Patentansprüche

1. Trommel zum Granulieren von feinteiligen Stoffen, die um ihre Längsachse drehbar gelagert ist und deren Stirnseite eine Einfüllöffnung und deren andere Stirnseite eine Austragsöffnung aufweist, **dadurch gekennzeichnet, dass** der Querschnitt der Trommel ein Vieleck ist.

2. Trommel nach Anspruch 1, **dadurch gekennzeichnet, dass** das Vieleck abgerundete Ecken hat und somit die Form eines Wellbleches.

3. Trommel nach Anspruch 1, **dadurch gekennzeichnet, dass** die Trommel mit einer verstellbaren Hubeinrichtung zur Einstellung eines positiven und eines negativen Winkels ausgerüstet ist.
